(19) Europäisches Patentamt
European Patent Office
Office européen des brevets

(11) Veröffentlichungsnummer: **0 061 610**
**B1**

(12) # EUROPÄISCHE PATENTSCHRIFT

(45) Veröffentlichungstag der Patentschrift: **26.11.86**

(21) Anmeldenummer: **82101816.5**

(22) Anmeldetag: **08.03.82**

(51) Int. Cl.⁴: **B 01 D 13/04,** C 08 J 5/22, C 08 F 8/00, B 01 D 13/00, B 01 D 13/01

(54) **Semipermeable Membranen aus chemisch modifizierten, vernetzten Polymeren auf Acrylnitrilbasis, Verfahren zu ihrer Herstellung und ihre Verwendung.**

(30) Priorität: **25.03.81 CH 2030/81**

(43) Veröffentlichungstag der Anmeldung: **06.10.82 Patentblatt 82/40**

(45) Bekanntmachung des Hinweises auf die Patenterteilung: **26.11.86 Patentblatt 86/48**

(84) Benannte Vertragsstaaten: **BE CH DE FR GB IT LI NL**

(56) Entgegenhaltungen:
**EP-A-0 025 973**
**DE-A-2 505 255**
**GB-A-1 569 563**

**CHEMICAL ABSTRACTS, Band 83, 1975, Seite 60, Zusammenfassung Nr.11675p, Columbus, Ohio (US)**
**CHEMICAL ABSTRACTS, Band 83, 1975, Seite 55, Zusammenfassung Nr.207279g, Columbus, Ohio (UD)**

(73) Patentinhaber: **ALIGENA AG, Freie Strasse 103, CH-4051 Basel (CH)**

(72) Erfinder: **Linder, Charles, Dr., 20 Derech Yavneh, Rehovot (IL)**
Erfinder: **Aviv, Gershon, Dr., 42 Burla St., Tel Aviv (IL)**
Erfinder: **Perry, Mordechai, Dr., 32 Sokolov Street, Petach Tikvah (IL)**
Erfinder: **Kotraro, Reuven, Derech Yavneh 11, Rehovot (IL)**

(74) Vertreter: **Becher, Pauline, Dr., A. Braun, Braun, Héritier, Eschmann AG Holbeinstrasse 36- 38, CH-4051 Basel (CH)**

EP 0 061 610 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1986

**Beschreibung**

Die vorliegende Erfindung betrifft semipermeable Membranen mit verbesserter Beständigkeit, insbesondere gegen organische Lösungsmittel und Druckeinwirkung. Die Membranen werden aus Polyacrylnitril oder Copolymeren aus Acrylnitril und anderen äthylenisch ungesättigten Monomeren hergestellt und dann chemisch modifiziert und vernetzt.

Die chemische Modifikation kann mit Basismembranen beliebiger Porengrösse und beliebigen Ausschlussgrenzen (cut-offs) durchgeführt werden, z.B. mit Ultrafiltrations- oder Umkehrosmosemembranen (UF- oder RO-Membranen), mit Membranen, die bezüglich ihrer Porengrösse zwischen den UF- und RO-Membranen liegen, oder auch mit Membranen, die als porös oder mikroporös bezeichnet werden. Acrylnitrilcopolymere (bzw. Polyacrylnitrile) sind geeignete Ausgangsmaterialien zur Herstellung von Membranen (Porengrössen von etwa 10 µm bis 0.1 nm). Besonders geeignet sind sie zur Herstellung von UF-Membranen (GB-A- 1327990, EP-A-1233). Besonders nachteilig ist es jedoch, dass sie sehr druckempfindlich sind (besonders die Membranen mit grossen Poren) und in vielen organischen Lösungsmitteln löslich sind.

In der Patentliteratur gibt es bereits Vorschläge, um diese Nachteile zu überwinden (DE-A-2942763, CB-A-1569563, CB-A-2011828 und GB A-2016301), doch benötigen die beschriebenen Modifikationsverfahren in der Regel relativ teure chemische Reagenzien, die unter wasserfreien Bedingungen appliziert werden müssen und lange Reaktionszeiten verlangen, ohne jedoch die Verbesserung der Membranen im gewünschten Masse zu erreichen. Insbesondere weisen diese Membranen in manchen Fällen eine signifikante Reduktion des Durchflusses (Flux) im Vergleich mit der nicht modifizierten Membran auf.

Dies gilt auch für Polyacrylnitrilmembranen, die mit Hydroxylamin und gegebenenfalls weiteren Verbindungen modifiziert wurden (CB- A-1569563, C.A. 83,11675p (1975) C.A. 83,207279g (1975).

In der nichtvorveröffentlichten älteren EP-A-25973 werden schliesslich semipermeable Membranen beschrieben, die durch chemische Modifikation einer Polyacrylnitrilmembran mit Hydroxylamin' und anschliessend mit einem anionischen oder kationischen Reaktivfarbstoff oder Cyanurchlorid erhalten werden.

Aufgabe der vorliegenden Erfindung ist es nun, druckbeständige und lösungsmittelunempfindliche semipermeable Membranen auf Polyacrylnitrilbasis, die die vorgenannten Nachteile nicht aufweisen, bereitzustellen.

Die gestellte Aufgabe wird dadurch gelöst, dass man die Basismembran in wässrigem Medium mit billigen Reagenzien, z.B. Carbonsäureimidhalogeniden und davon abgeleiteten Derivaten, und mit einer einfachen chemischen Reaktionsführung modifiziert. Die guten Durchflusseigenschaften der Basismembranen bleiben dabei erhalten oder werden sogar noch verbessert.

Gegenstand der vorliegenden Erfindung sind daher semipermeable Membranen aus chemisch modifizierten, vernetzten Polymeren auf Acrylnitrilbasis, dadurch gekennzeichnet, dass sie aus Polyacrylnitril oder Copolymeren aus Acrylnitril und anderen äthylenisch ungesättigten Monomeren bestehen, die durch Umsetzung mit

(a) Hydroxylamin und

(b) einer mindestens zwei funktionelle Gruppen aufweisenden und mit Amidoximgruppen reaktionsfähigen, farblosen und ionische Gruppen aufweisenden Verbindung modifiziert sind.

Gegenstand der vorliegenden Erfindung sind auch solche Membranen, die unter Verwendung einer Kombination aus anionischen und kationischen polyfunktionellen und mit Amidoximgruppen reaktionsfähigen Verbindungen als Komponente (b) erhalten werden, wobei die anionischen Verbindungen den nachfolgenden Formeln (2), (3), (5) bis (7), (9) und (10) und die kationischen Verbindungen den nachfolgenden Formeln (4) und (8) entsprechen.

Weitere Gegenstände der vorliegenden Erfindung sind Verfahren zur Herstellung der erfindungsgemässen Membranen sowie ihre Verwendung als UF- oder RO-Membranen, z.B. zur Konzentrierung und Aufreinigung von Lösungen, insbesondere bei der Abtrennung von Salzen von organischen Verbindungen oder bei der Reinigung von Abwässern.

Diese und andere Gegenstände der vorliegenden Erfindung werden nachfolgend weiter erläutert.

Bei den Komponenten (b) handelt es sich um reaktive, ionische, farblose Verbindungen oder Kombinationen aus anionischen und kationischen polyfunktionellen Verbindungen der angegebenen Formeln. Durch die ionischen Gruppen, wie z.B. $-SO_3^{\ominus}$ oder $-COO^{\ominus}$ oder Ammoniumgruppen in der Komponente (b), kann der Durchfluss (Flux) der Membranen verbessert werden (Oberfläche und Poren der Membran werden hydrophiler). Ausserdem wird ihre Beständigkeit gegen Pilz- und Bakterienbefall verbessert.

Für Membranen mit kleineren Poren resultiert nach der erfindungsgemässen Modifikation in der Regel ein höherer Rückhalt oder verbesserte Permselektivität.

Die erfindungsgemässen Membranen werden durch chemische Modifizierung von Polyacrylnitril enthaltenden Membranen hergestellt.

Für die Modifikation ist eine Reaktionsfolge von zwei chemischen Schritten notwendig.

Das Verfahren zur Herstellung der erfindungsgemässen Membranen ist dadurch gekennzeichnet, dass man

(a) Nitrilgruppen in der Polyacrylnitril oder Copolymere aus Acrylnitril und anderen äthylenisch ungesättigten Monomeren enthaltenden Membran durch Reaktion mit Hydroxylamin in Amidoximgruppen überführt und mit

(b) einer mindestens zwei funktionellen Gruppen aufweisenden und mit Amidoximgruppen reaktionsfähigen, farblosen und ionische Gruppen aufweisenden Verbindung umsetzt.

Verwendet man als Komponente (b) die erwähnte Kombination aus anionischen und kationischen

Verbindungen der angegebenen Formeln, so werden sogenannte amphotere Membranen erhalten. Das erfindungsgemässe Herstellungsverfahren ist dann dadurch gekennzeichnet, dass man

(a) Nitrilgruppen in der Polyacrylnitril oder Copolymere aus Acrylnitril und anderen äthylenisch ungesättigten Monomeren enthaltenden Membran, durch Reaktion mit Hydroxylamin in Amidoximgruppen überführt und mit

(b) einer Kombination aus den anionischen und mit Amidoximgruppen reaktionsfähigen Verbindungen der Formeln (2), (3), (5), (6), (7), (9) und (10) und den kationischen und mit Amidoximgruppen reaktionsfähigen Verbindungen der Formeln (4) und (8)

umsetzt.

Die Reaktion kann in einer Alternative so geführt werden, dass die Membran (nach Modifikation mit den Komponenten (a) und (b)) noch reaktionsfähige Gruppen enthält.

Die Ausgangsmembranen (die erfindungsgemäss modifiziert werden) können UF-, RO-, poröse oder mikroporöse Membranen sein, deren Porendurchmesser im Bereich von 10 µm bis 0.1 nm liegen.

Die verwendete Ausgangs(Grund)membran, die erfindungsgemäss modifiziert wird, besteht in der Regel aus Polyacrylnitril oder aus Acrylnitril-Copolymerisaten, wobei der Anteil der Acrylnitrileinheiten im Copolymer mindestens 5, vorzugsweise mindestens 20 und insbesondere mindestens 50 % beträgt. Weitere geeignete Polymere aus der Acrylnitrilreihe (neben Polyacrylnitril) sind solche aus Alkyl($C_1$-$C_6$)-Acrylnitrilen , z.B. Methacrylnitril oder Hexylacrylnitril, Arylacrylnitrilen, z.B. Phenylacrylnitril, Halogenacrylnitril, worin Halogen Fluor, Chlor oder Brom ist, z.B.α-Fluoracrylnitril oder k-Chloracrylnitril, und Thioacrylnitrilen.

Geeignete Comonomere, die mit Acrylnitril copolymerisiert werden können, sind Monomere mit z.B. hydrophoben, hydrophilen, polaren oder ionischen Gruppen, insbesondere z.B. Vinylester mit 2 bis 18 Kohlenstoffatomen im Säureteil, insbesondere Vinylacetat, Vinyläther mit 3 bis 12 Kohlenstoffatomen, Vinylpyridin, Vinylchlorid, Styrol, Butadien, Acryl- oder Methacrylsäure oder (Meth)acrylate, z.B. solche mit 1 bis 4 Kohlenstoffatomen im Esterteil. Ferner Maleinsäureanhydrid, 2-Aminoäthylmethacrylat und Allylverbindungen, wie z.B. Allylalkohol, Allyl- oder Methallylsulfonsäure und ihre Salze (Alkalimetallsalze), Allyl- oder Methallylhalogenide, Allylamine oder Allyl-p-Toluolsulfonate. Ebenfalls geeignet sind Terpolymere, z.B. aus Acrylnitril, Styrol und Butadien (ABS-Polymere), Acrylnitril/ Vinylacetat/Methacrylat oder Acrylnitril/Methylmetharylat/Natriumallyl-sulfonat oder Tetrapolymere auf Acrylnitrilbasis.

Die Grundmembran kann auch aus Gemischen der genannten (Co)polymeren bestehen.

Weitere Membranen, die erfindungsgemäss modifiziert werden können, sind solche, in denen mindestens einige der Nitrilgruppen der Acrylnitrileinheiten zu Carboxylgruppen hydrolysiert oder zu Aminogruppen reduziert worden sind. Ferner sind auch solche Membranen geeignet, in denen die zur Herstellung verwendeten Comonomeren (neben Acrylnitril) chemisch modifiziert sind. Die erfindungsgemässen Membranen sollten mindestens 5 % Acrylnitril enthalten, so dass die chemische Modifikation überhaupt ausgeführt werden kann. Die zur erfindungsgemässen Modifikation benötigten Ausgangsmembranen sind kommerzielle Produkte oder sie können vom Fachmann leicht selber hergestellt werden. Entsprechende Giesslösungen und Herstellungsverfahren sind aus der technischen Literatur, insbesondere auch aus der Patentliteratur (vgl. z.B. GB-A-1 327 990 und GB-A- 2 016 301) bekannt.

Als besonders vorteilhaft haben sich als Komponente (b) cyclische Kohlensäureimidhalogenide und vor allem mindestens zwei reaktive Substituenten enthaltende Halogendi- oder -triazinverbindungen, die ionische Gruppen tragen, erwiesen.

Ionische Derivate auf Basis von Tetrachlorpyrimidin und vor allem Cyanurchlorid sind dabei besonders vorteilhaft.

Bei den hier als Komponente (b) verwendeten, cyclischen Kohlensäureimidhalogeniden handelt es sich insbesondere um

(A) Primäre Kondensationsprodukte aus s-Triazinverbindungen mit mindestens zwei an Kohlenstoffatome gebundenen gleiche oder verschiedene Halogenatome, wie z.B. Cyanurchlorid, Cyanurfluorid, Cyanurbromid mit z.B. Phenolen, Amilinem, Alkamolen und Alkylaminen, die ionische Gruppen enthalten und die dihalogeniertem Triazine wasserlöslich machen. Als ionische Gruppen kommem Sulfonsäure-, Carbonsäure-, quaternäre Ammoniumsulfonium- oder Phosphoniumgruppen infrage.

(B) Wasserlösliche Derivate von Pyrimidinen ähnlich denen wie sie umter (A) genannt sind, wobei z.B. die folgenden Pyrimidine geeignet sind.

Pyrimidine mit mindestens zwei reaktionsfähigen gleichen oder verschiedenen Halogenatomen, wie 2,4,6-Trichlor-, 2,4,6-Trifluor-oder 2,4,6-Tribrompyridin, die in 5-Stellung beispielsweise durch eine Alkyl-, Alkenyl-, Phenyl-, Carboxyl, Cyan-, Nitro-, Chlormethyl-, Chlorvinyl-, Carbalkoxy-, Carboxymethyl-, Alkylsulfonyl-, Carbonsäureamid- oder Sulfonsäureamidgruppe, vorzugsweise jedoch durch Halogen, wie z.B. Chlor, Brom oder Fluor weitersubstituiert sein können. Besonders geeignete Halogenpyrimidine sind 2,4,6-Tri-chlor- und 2,4,5,6-Tetrachlorpyrimidin.

Beispiele für weitere Reaktivgruppierungen die in der Komponente (b) vorkommen können, leiten sich von den folgenden Verbindungen ab:

(C) Halogenpyrimidincarbonsäurehalogenide, wie z.B. Dichlorpyrimidin-5-oder -6-carbonsäurechlorid;

(D) 2,3-Dihalogen-chinoxalin, -chinazolin- oder -phthalazin-carbonsäure- oder -sulfonsäurehalogenide, wie 2,3-Dichlorchino-xalin-6-carbonsäurechlorid bzw. -6-sulfonsäurechlorid, 2,6-Dichlorchinazolin-6- oder -7-carbonsäurechlorid, 1,4-Dichlor-phthalazin-6-carbonsäurechlorid oder -bromid;

(E) 2-Halogenbenzothiazol- bzw. -oxazolcarbonsäure- oder -sulfonsäurehalogenide, wie 2°Chlorbenzothiazol- bzw. -oxazol-5-oder -6-carbonsäurechlorid bzw. -5- oder -6-sulfonsäurechlorid;

(F) Halogen-6-pyridazonyl-1-alkanoylhalogenide oder -1-benzoylhalogenide, wie z.B. 4,5-Dichlor-6-pyridazonyl-1-propionyl-chlorid bzw. -1-benzoylchlorid.

Polyfunktionelle Verbindungen, die als Komponente (b) geeignet sind und ionische Gruppen enthalten, können auch farbig sein, wenn sie als Kombination aus anionischen und kationischen polyfunktionellen Verbindungen eingesetzt werden. Beispiele für solche Verbindungen sind die Azo-Reaktivfarbstoffe der Formeln (2) und (5).

Als ionische Gruppen in der Komponente (b) sind Sulfatogruppen ($OSO_3^{\ominus}$),Sulfonsäuregruppen ($SO_3^{\ominus}$),Carboxylgruppen ($COO^{\ominus}$), von primären, sekundären oder tertiären Aminogruppen und Wasserstoff gebildete Ammoniumgruppen oder quaternäre Ammonium-Phosphonium- oder Sulfoniumgruppen geeignet. Bevorzugt sind Verbindungen mit Sulfonsäure-, Carboxyl- oder Ammoniumgruppen. Besonders günstige Ergebnisse werden mit sulfonsäuregruppenhaltigen Komponenten erzielt.

Besonders geeignete reaktive Gruppen in diesen Verbindungen sind:. Dichlortriazinyl, 2,4 Dichlorpyrimidyl, 2,4,5-Trichlorpyrimidyl, 2,3-Dichlorchinoxalin-6-carbonyl, 4,5-Dichlorpyridazinylpropionyl oder 1,4-Dichlorphthalazin-6-carbonyl, die z.B. über -CONH-, $-SO_2NH-$ oder -NH-Ar-N=N- (Ar = phenylen oder Naphthylen) mit dem Farbstoffmolekül verbunden sein können.

Wenn eine Kombination von Verbindungen als Komponente (b) verwendet wird, sind die reaktiven Azofarbstoffe der Formeln (2) und (5), die als ionische Gruppen Sulfonsäure- ($-SO_3H$) (können auch in Salzform/Alkalimetallsalze vorliegen) und als Reaktivgruppierungen Dichlortriazinyloder 2,4-Dichlorpyrimidyl enthalten, als anionische Verbindungen besonders bevorzugt.

Für die Herstellung von amphoteren Membranen sind die Kombinationen der folgenden Verbindungen besonders geeignet:

- Verbindungen der Formeln (2), (3), (7) und (10) mit der Verbindung der Formel (4)
- Verbindungen der Formeln (2), (3), (7) und (10) mit der Verbindung der Formel (8)
- Verbindung der Formel (6) mit der Verbindung der Formel (4)
- Verbindung der Formel (6) mit der Verbindung der Formel (8).

Die anionischen Gruppen sind Carboxyl- oder Sulfonsäuregruppen, gegebenenfalls auch in Salzform, die kationischen Gruppen sind Ammoniumgruppen.

Die Reaktion mit den anionischen und kationischen Verbindungen kann in beliebiger Reihenfolge oder auch gleichzeitig erfolgen.

Besonders bevorzugte Kombinationen (b) für die Herstellung von amphoteren Membranen ergebensich aus der anionischen Verbindung der nachstehenden Formel (3) mit der kationischen Verbindung der nachstehenden Formel (4).

Beispiele für ionische farblose Komponenten (b) sind die zuvor genannten substituierten Triazine oder Pyrimidine. Besonders geeignet sind die Verbindungen der Formeln (3) oder (4) sowie (6) bis (10), die nachfolgend angegeben sind.

Das Modifikationsverfahren zur Herstellung der erfindungsgemässen Membranen wird in der Regel in wässrigem Medium durchgeführt, obwohl auch organische Lösungsmittel, wie z.B. Aethanol, Butanol, Aceton, Dimethylformamid (DMF) oder N-Methylpyrrolidon (NMP), allein, im Gemisch untereinander oder auch im Gemisch mit Wasser verwendet werden können.

Der erste Reaktionsschritt betrifft die Umwandlung von Nitrilgruppen in Amidoximgruppen durch Reaktion mit Hydroxylamin bzw. Hydroxylamin-Salzen. Der Umwandlungsgrad liegt in der Regel im Bereich von 0,2 bis 30 % und vorzugsweise von 1 bis 10 % (Höhere Werte können erreicht werden, führen aber im allgemeinen zu spröden Membranen).

Die Hydroxylamin(Hydroxylamin-Hydrochlorid oder -Hydrosulfat)-Lösung ist in der Regel 1 bis 10 %ig und wird mit Alkali (Natriumhydroxid, Natriumcarbonat) oder anderen alkalisch reagierenden Verbindungen auf einen pH-Wert von 6,0 - 7,0 eingestellt.

Der zu wählende Temperaturbereich (etwa 50 bis 80°C) hängt von der Hydroxylaminkonzentration dem pH-Wert und der Reaktionszeit (etwa 2 bis 60 Minuten) ab.

So kann man z.B. bei einer Reaktionstemperatur von 50 bis 70° C, die übrigen Bedingungen wie folgt wählen:. pH-Wert 6,5; Reaktionszeit 2 bis 15 Minuten; Hydroxylaminkonzentration 10 %.

Höhere Temperaturen erfordern kürzere Reaktionszeiten, während bei niedrigen Hydroxylaminkonzentrationen längere Reaktionszeiten und/ oder höhere Temperaturen notwendig sind.

Durch Elementaranalyse kann man die Konzentration der Amidoximgruppen im ersten Modifikationsschritt ermitteln. Der Prozentgehalt an Kohlenstoff, Stickstoff, Sauerstoff und Wasserstoff vor und nach einer 100%igen Umwandlung der Nitrilgruppen beträgt:

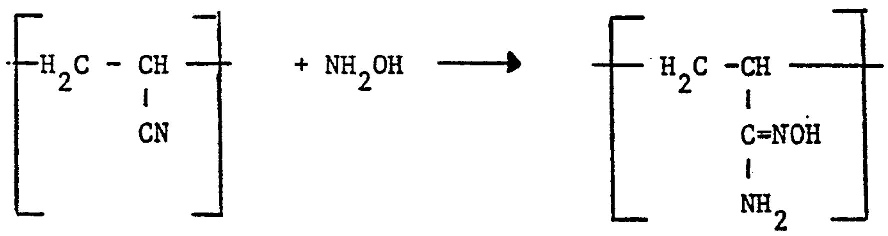

| | |
|---|---|
| C - 67,92% | C - 41,86% |
| N - 26,41% | N - 35,55% |
| H - 5,66% | H - 6,97% |
| | O - 18,60% |

Den Grad der Umsetzung von Ni-tril- in Amidoximgruppen kann man mit Hilfe des Gehalts an Kohlenstoff wie folgt überprüfen. Eine 100%ige Umsetzung entspricht einem Kohlenstoffverlust von 26,06 %:.

$$\frac{\text{\% Kohlenstoff vor der Modifikation - \% Kohlenstoff nach der Modifikation}}{26{,}06}$$

Membranen aus Folyacrylnitril werden hergestellt und werden in einer 10%igen Hydroxyaminlösung bei 60°C während 2, 5 und 10 Minuten behandelt. Tabelle A gibt die Ergebnisse an.

**Tabelle A**

**Umwandlung von Nitrilgruppen in Amidoximgruppen**

| Reaktionszeit (Minuten) | Kohlenstoffgehalt (%) | Umwandlung (%) |
|---|---|---|
| 0 | 66,83<br>66,60 | - |
| 2 | 66,68<br>66,78 | - |
| 5 | 64,10<br>63,93 | 10,32 |
| 10 | 60,83<br>60,88 | 22,5 |

Nach einer Reaktionszeit von 2 Minuten erreicht man nur eine sehr geringe Aenderung des Kohlenstoffgehalts, nach 5 bzw. 10 Minuten erreicht man jedoch Werte von 10,32 bzw. 22,5%.

In Tabelle B werden die gleichen Werte für eine Poly-(acrylnitril- vinylacetat)-Membran (97/3) angegeben.

**Tabelle B**

| Reaktionszeit (Minuten) | Reaktionstemperatur (°C) | Kohlenstoff-gehalt (%) | Umwandlung 1) (%) |
|---|---|---|---|
| 10 | 45 | 65,10 | 3,00 |
| 15 | 45 | 64,00 | 7,20 |
| 30 | 45 | 60,57 | 20,3 |
| 10 | 50 | 64,68 | 4,60 |
| 15 | 50 | 63,56 | 8,90 |
| 10 | 55 | 63,10 | 10,67 |
| 15 | 55 | 61,17 | 18,07 |
| 0 | - | 67,50 | - |

1) Die Umwandlung (Nitril - Amidoxim) wird ausgehend von einem Kohlenstoffgehalt von Acrylnitril von 65,88 % berechnet.

Die Ergebnisse zeigen, dass die Anzahl der Amidoximgruppen, die in die Membran eingeführt werden, eine Funktion von Reaktionszeit und Reaktionstemperatur sind.

(1) Höhere Temperaturen erhöhen die Umwandlungsrate.

(2) Längere Reaktionszeiten führen zu einer grösseren Anzahl von Amidoximgruppen.

(3) Die Umwandlungsrate (% Umwandlung/Zeit) steigt mit höheren Temperaturen.

Unter den üblichen Modifikationsbedingungen bei 55 bis 60°C werden 7 bis 10% oder 1,2 bis 1,8 Mol der Nitrilgruppen in Amidoximgruppen umgewandelt.

Die Umsetzung mit der Komponente (b)- den Kohlensäureimidhalogenidderivaten hängt z.B. von der Reaktionszeit (etwa 1 Minute bis 5 Stunden) dem pH-Wert (etwa 4 bis 11), der Konzentration der Amidoximgruppen, der Reaktivität der Komponente (b), dem Lösungsmittel und der Reaktionstemperatur (0 bis 60°C) ab.

Reaktive Komponenten (b) benötigen in der Regel nur kurze Reaktionszeiten und niedrige Reaktionstemperaturen. Der Grad der Umsetzung ist ausserdem stark vom pH-Wert abhängig. Die Konzentration der Lösungen der Komponente (b) kann zwischen 0,01 und 10 % variieren und liegt vorzugsweise zwischen 0,5 und 5 %.

Es versteht sich, dass die Reaktionen auch ausserhalb der zuvor genannten Grenzen möglich sind, wenn z.B. ein parameter verändert wird (z.B. lange Reaktionszeit bei tiefen Temperaturen usw.).

Bevorzugtes Reaktionsmedium ist Wasser, gegebenenfalls mit Anteilem organischer Lösungsmittel (z.B. 20 % Aceton).

Normalerweise reagiert ein Mol der Kohlensäureimidhalogenidverbindung mit 2 Amidoximäquivalenten, um eine Vernetzung herbeizuführen. Zusätzliche Reaktionsgruppen und/oder hydrophile und ionische Gruppen werden so an der Membran fixiert. Die Vernetzung und die Einführung der ionischen Gruppem verleiht den Membranen die genanntem charakteristischen Eigenschaften. Werden sowohl anionische als auch kationische Reste - unter Verwendung von entsprechenden anionischen und kationischen Derivaten auf Basis von Kohlensäureimidhalogenidenan den Membranen fixiert, so erhält man die amphoteren Membranen, die sich durch eine hohe Salzdurchlässigkeit (permeabilität) auszeichnen und z.B. zur Trennung von Salz (NaCl) von höhermolekularen gelöstem Stoffen (Verbindungen) geeignet sind.

Die Reaktion der Komponente (b) mit den Amidoximgruppen kann insbesondere bei Copolymeren aus Acrylnitril und anderen äthylenisch ungesättigten Comonomeren durch sterische, elektrostatische oder

induktive Effekte beeinflusst werden, was bei der Wahl der Reaktionsbedingungen entsprechend berücksichtigt werden muss. Ebenfalls zu beachten sind z.B. die Dichte und Kristallinität der Polymeren (Membranen).

Es wurde gefunden, dass die Reaktivitätvon Kohlensäureimidhalogeniden mit polyamidoximen (Polymeren mit Amidoximgruppen) grösser ist, als aus der Reaktivität mit monomeren Aminen oder Hydroxylverbindungen abgeleitet werden kann.

Sollte bei der Reaktion mit der Komponente (b) eine zu starke Vernetzung der Membran beobachtet werden (Bildung vom sehr spröden Membranen), so kann mam einen Teil der reaktiven Amidoximgruppen hydrolysieren oder maskieren und so die Reaktion mit der Komponente (b) steuern. Diese Reaktion kann vor oder gleichzeitig mit der Umsetzung der Komponente (b) erfolgen.

Hierfür eignen sich Verbindungen mit Hydroxyl-(Polyvinylalkohol) Amino-(Ammoniak, Hydrazin, Polyäthylenimin), Thio-(Schwefelwasserstoff) oder Isocyanatgruppen (Phenylisocyanat).

Der Grad der Vernetzung kann relativ gut am Quellfaktor in solchen Lösungsmitteln (DMF, NMP) abgelesen werden, die die nicht modifizierten Membranen zu lösen vermögen.

Membranen, die sehr stark vernetzt sind, sind sehr spröde und quellen praktisch nicht. Andererseits zeigen Quellgrade von etwa 500 % an, dass nur eine unzureichende Vernetzung stattgefunden hat und die Membran für viele Zwecke nicht eingesetzt werden kann.

Das Verfahren zur Herstellung der erfindungsgemässen Membranen erfolgt vorzugsweise durch Modifikation einer bereits vorliegenden Membran durch Umsetzung mit den Komponenten (a) und (b).

Als Alternative zu diesem Verfahren kann die Reaktion mit Hydroxylamin auch unabhängig von der Membranbildung erfolgen, d.h. man modifiziert Polymere auf Acrylnitrilbasis mit Hydroxylamin und giesst aus diesen Polymeren dann die Membranen (auf ein Trägermaterial); die Vernetzung erfolgt dann wie angegeben. Eine weitere Alternative ist die Umsetzung mit Hydroxylamin im der Giesslösung.

Die Aufgabe des porösen Trägermaterials ist es, die mechanische Stabilität der Membranen zu verbessern. Geeignete Trägermaterialien sind in der Regel wasserunlöslich und sie bestehen z.B. aus Polyacrylnitrilen, Polysulfonen, Polyamiden, Polyolefinen, wie z.B. Polyäthylenen oder Polypropylenen, Polyestern (non wovens) oder cellulosischen Materialien sowie gegebenenfalls auch Mischungen aus diesen angegebenen Materialien. Die Dicke des Trägermaterials kann im Bereich von etwa 10 µm bis 2 mm liegen.

Das Verfahren zur Herstellung der erfindungsgemässen Membranen, die sich in der Regel auf einem (porösen) Träger befinden, wird so durchgeführt, dass man eine Seite des Trägers mit einer organischen Lösung (Lösungsmittel z.B. Dimethylformamid, N,N-Dimethylacetamid, N-Methylpyrrolidon) von Polyacrylnitril oder von Copolymeren aus Acrylnitril und anderen äthylenisch ungesättigten Monomeren begiesst und den erhaltenen noch feuchten Film in Wasser von Raumtemperatur oder in Eiswasser eintaucht, wobei das Wasser gegebenenfalls noch Zusätze, wie z.B. Salze, Tenside oder organische Lösungsmittel enthalten kann. Anschliessend wird die koagulierte Membran gespült und getrocknet.

Die Zeit zwischen dem Giessen der Membran und der Koagulation in wässrigen Medien kann 0 bis 24 Stunden betragen.

Die Giesslösung zur Herstellung der Membranen kann gegebenenfalls Zusätze enthalten, die die Porosität der Membranen beeinflussen können und auch die mechanische Stabilität verbessern können, wie z.B. Lösungsmittel, Nichtlösungsmittel, Tenside und/oder anorganische und organische Salze.

Aus praktischen Gründen ist es erwünscht, dass die Dicke der feuchten Filmschicht etwa im Bereich von 0,05 bis 2 mm, vorzugsweise zwischen 0,1 und 0,4 mm liegt. Dünnere oder auch dickere Filme sind ebenfalls möglich.

Die Membranen können je nach Verwendungszweck verschiedene Formen aufweisen, z.B. plattenförmig, röhrenförmig, in Form einer Tasche, eines Sacks, eines Konus oder als Hohlfasern vorliegen. Bei starker Druckbelastung können die Membranen natürlich durch Non-woven-Träger, Träger aus textilen Geweben oder papier, Drahtsiebe oder Lochplatten (Module) gestützt und damit geschützt werden. Innerhalb des weiter oben angegebenen Bereiches kann die Porengrösse durch verschiedene Temperaturen variiert und ebenfalls dem jeweiligen Verwendungszweck angepasst werden. So kann z.B. durch Tempern der Membranen vor oder nach ihrer chemischen Modifikation die Porengrösse und damit Durchfluss und das Rückhaltevermögen der Membranen verändern.

Die durchschnittliche Ladungsdichte, z.B. von ionischen Gruppen auf der Membran liegt vorteilhaft zwischen 10 und 2500 Milliäquivalenten/ kg, vorzugsweise zwischen 10 und 1500 Milliäquivalenten/kg der trockenen Membran, nach der Modifikation mit ionischen Komponenten (b).

Die erfindungsgemässen Membranen eignen sich für die verschiedensten Trennoperationen, z.B. für die Umkehrosmose und insbesondere für die Ultrafiltration von Lösungen. Sie zeichnen sich durch gute Temperatur-, pH-Wert- und Druckbeständigkeit aus und sind lösungsmittelunempfindlich.

Ultrafiltrationsverfahren zur Konzentrierung und/oder Reinigung von Flüssigkeiten (Lösungen) oder zur Trennung von gelösten Komponenten werden z.B. so durchgeführt, dass man die Flüssigkeiten (Lösungen) auf einer Seite der Membran vorlegt und unter Anwendung eines (hydraulischen) Drucks, der grösser als der osmotische Druck der Lösungen ist, die Lösungen filtriert.

Die Vorteile können wie folgt zusammengefasst werden:.

1. Einsatzmöglichkeit bei pH-Werten von etwa 2 bis 10 und Temperaturen bis zu 70° C.

2. Verbesserung der Stabilität gegenüber Lösungsmittel, wobei die Membranen in den üblichen Lösungsmitteln für Polyacrylnitril, z.B. DMF oder NMP, nicht mehr löslich sind.

3. Verbesserter Widerstand gegen hohe Drücke (gute Stabilität). Druckbereich etwa zwischen 2 und 100, vorzugsweise 2 und 40 und insbesondere 2 bis 30 bar.

Insbesondere die folgenden Anwendungen sind für die erfindungsgemässen Membranen vorteilhaft, wobei es sich im Prinzip stets um Trennungen einwertiger Ionen niedrigen Ionengewichts von mehrwertigen Ionen mit niedrigem oder höherem Ionengewicht und einwertigen Ionen mit höherem Ionengewicht, um Trennungen ionogener von nichtionogenen Substanzen oder von ionogenen Verbindungen unterschiedlichen Molekulargewichts oder entgegengesetzter Ladung handelt.

1. Die Reinigung von Abwässern, welche bei der Produktion und Anwendung von Farbstoffen und optischen Aufhellern anfallen.

2. Die Trennung von Proteinen oder Hormonen, welche ähnliche Molekulargewichte haben jedoch entgegengesetzt geladen sind.

3. Die Abtrennung von ionischen Tensiden (Detergenzien, Netzmittel, oder Dispergatoren) von anderen Chemikalien, welche in der Reaktionsmischung nach der Herstellung der Tenside noch vorhanden sind (Nebenprodukte, überschüssige Ausgangsprodukte).

4. Die Entfernung von ionogenen Tensiden aus Abwässern.

5. Die Trennung von ionogenen Molekülen von Wasser, d.h. die Konzentrierung von wässerigen Lösungen, welche Metallkomplexe, Tenside, Farbstoffe oder Proteine enthalten.

6. Die Trennung von geladenen und ungeladenen Verbindungen.

Der Trenneffekt (das Rückhaltevermögen) der Membranen kann wie folgt gemessen werden: eine kreisförmige Membran von 13 $cm^2$ Fläche wird, auf einer Sinterscheibe aus rostfreiem Stahl eingesetzt. 150 ml der (zu prüfenden) Lösung, die die zu prüfende Substanz in der Konzentration $c_1$ (g Substanz in g Lösung) enthält, wird auf die Membran im Stahlzylinder gegeben und mit Stickstoff einem Druck von 14 bar ausgesetzt. Die Lösung wird magnetisch gerührt. Die auf der Austrittsseite der Membran anfallende Flüssigkeit wird auf ihren Gehalt (Konzentration) $c_2$ an zu prüfender Substanz untersucht, indem ab Start des Experimentes 3 Proben von je 5 ml genommen werden. Im allgemeinen ist die Durchflussmenge durch die Membran und die Zusammensetzung der 3 Proben konstant. Hieraus lässt sich das Rückhaltevermögen als

$$R = \frac{c_1 - c_2}{c_1} \cdot 100 \ (\%)$$

berechnen. Als Dur hflussmenge pro Flächen- und Zeiteinheit ergibt sich

$D = V \,.\, F^{-1}.t^{-1}$

V: Volumen

F: Membranfläche

t: Zeit

D ist zweckmässig ausgedrückt in $m^3/m^2.d^1$, d.h. Anzahl Kubikmeter je Quadratmeter Membranfläche und Tag oder in $1/m^2.h$, d.h. Liter pro Quadratmeter Membranfläche und Stunde.

Zusätzlich zu den Messungen an Flachmembranen werden auch Messungen mit röhrenförmigen Membranen von 60 cm Länge und einem äusseren Durchmesser von 1,4 cm durchgeführt. Diese röhrenförmigen Membranen werden dazu in eine perforierte Röhre aus rostfreiem Stahl gebracht.

Das Ganze wird in eine Röhre aus Polycarbonat gebracht. Der Ausfluss der Membranen befindet sich zwischen dieser äusseren Polycarbonatröhre und der Stahlröhre. Die Flüssigkeitszugabe erfolgt als turbulent fliessender Strom der Lösung unter Druck. Die Fliessgeschwindigkeit wird konstant bei etwa 10 - 15 Litern pro Minuten gehalten. Die Berechnung des Rückhaltevermögens und des Durchflusses erfolgt auf die gleiche Weise wie für die Flachmembranen.

In den nachfolgenden Beispielen wird der Farbstoff der Formel (1) in Testlösungen verwendet. Die Verbindungen der Formel (2) bis (10) dienen als Komponente (b).

(1)

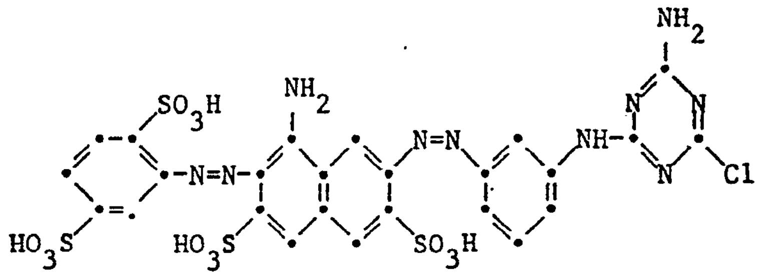

(2)

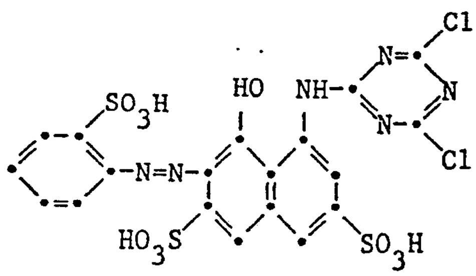

(3)

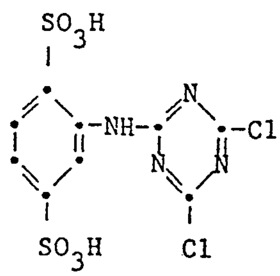

(4)

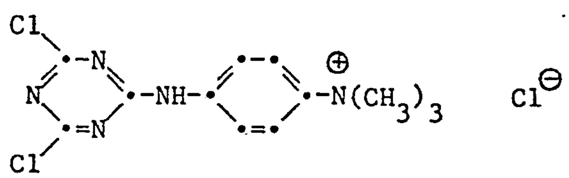

(5)

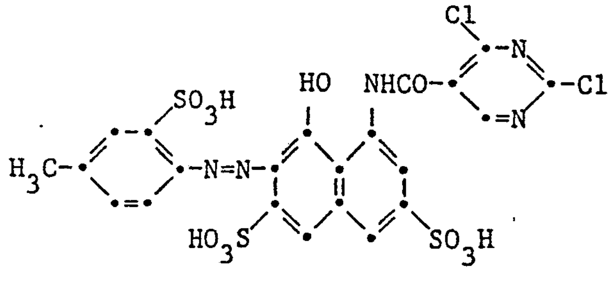

(6) 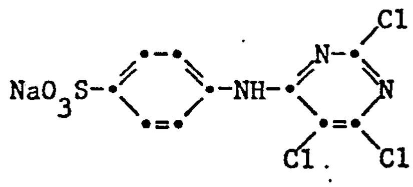

(7) 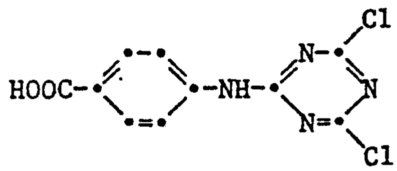

(8) 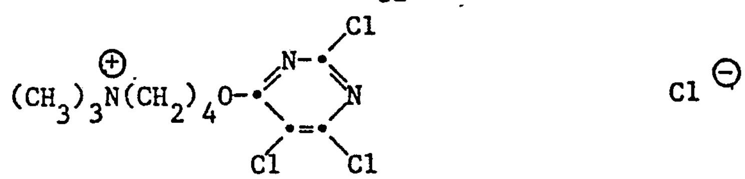

(9) 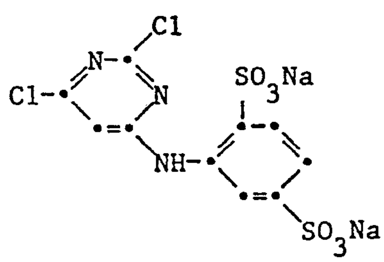

(10) 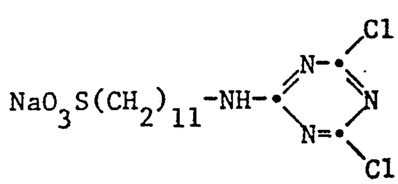

**Beispiel 1**

15 g eines Acrylnitril/Vinylacetatcopolymers werden in 70 g N-Methylpyrrolidon gelöst, filtriert und zu einem Film (0,4 mm Dicke des nassen Films) auf eine Glasplatte gegossen und anschliessend sofort in Wasser vom

Raumtemperatur eingetaucht.

Nach 24 Stunden wird diese Membran mit Hydroxylamin und einem Kohlensäureimidhalogenid modifiziert und der Quellungsfaktor (Grad der Quellung) in N-Methylpyrrolidon gemessen. Membranen aus Acrylnitrilmonomeren, die nur durch chemische Umsetzung mit Hydroxylamin oder einem Kohlensäureimidhalogenid modifiziert sind, sind in N-Methylpyrrolidon löslich.

(A) Die Membran wird in eine wässrige Lösung eingetaucht, die 10 % Hydroxylamin und 7,5 % Natriumcarbonat (pH-Wert 6 bis 7) enthält. Reaktionszeit: 5 Minuten bei 60° C.

Die Membran wird dann eine Stunde in Wasser gewaschen. Sie ist löslich in N-Mcthylpyrrolidon. (Lässt man die Membran 24 Stunden in Wasser stehen, so quillt sie zwar in NMP, ist aber nicht mehr löslich).

(B) Die Membran wird gemäss (A) mit Hydroxylamin behandelt (55 °C, 7 Minuten). Anschliessend wird sie in einer 2 %igen wässrigen Lösung der Verbindung der Formel (3) bei pH 9 bis 10 und 25° C während 10 Minuten behandelt.

Quellungsgrad: 95 % in NMP.

(C) Die Membran wird gemäss (A) mit Hydroxylamin behandelt (55°C, 5 Minuten). Anschliessend wird gemäss Vorschrift (B), jedoch mit der Verbindung der Formel (4) weiterumgesetzt. (pH-Wert 9 - 10; 25°C; 10 Minuten). Quellungsgrad: 125 % in NMP.

**Beispiel 2a**

15 g eines Acrylnitril/Vinylacetat (97:3)-Copolymers werden in Dimethylformamid gelöst, filtriert, entgast und zu einer Membran (0,2 mm Dicke des feuchten Films) auf einen Polyester Nonwovens-träger gegossen. Anschliessend wird der noch feuchte Film in Wasser von Raumtemperatur eingetaucht. Man erhält eine wasserunlösliche UF-Membran, die fest mit dem Träger verbunden ist. Rückfluss und Rückhaltevermögen dieser Membran gegenüber dem Farbstoff der Formel (1) (0,15 %ige Lösung) bei 10 bar sind 231 $l/m^2.h$ bzw. 74,3 %. Nach der chemischen Modifikation mit Hydroxylamin wie in Beispiel 1(A) und der Umsetzung mit einer wässrigen Mischung von je 1 % der Verbindungen der Formeln (3) und (4) erhält man eine vernetzte amphotere Membran mit einer Salzpermeabilität von 35 % für eine 1,5 %ige Kochsalzlösung. Die Membran ist in DMF und NMP unlöslich.

**Beispiel 2b**

Beispiel (2a) wird wiederholt, wobei man anstelle der Verbindungen der Formeln (3) und (4) die Verbindung der Formel (6) einsetzt. Die Reaktionsverbindungen: pH-Wert 8 - 9, 10°C, 10 Minuten. Die erhaltene Membran ist vernetzt und unlöslich in N-Methylpyrrolidon.

**Beispiel 2c**

Beispiel (2a) wird wiederholt, wobei man anstelle der Verbindungen der Formeln (3) und (4) die Verbindung der Formel (7) einsetzt. Man erhält eine vernetzte Membran mit fixierten Carboxylgruppen.

**Beispiel 2d**

Beispiel (2a) wird wiederholt, wobei man anstelle von der Verbindungen der Formeln (3) und (4) die Verbindung der Formel (8) einsetzt. Man erhält eine vernetzte Membran mit kationischen Gruppen.

Die gemäss den Beispielen (2b) bis (2d) erhaltenen Membranen zeigen Eigenschaften vergleichbar mit denen der Membran gemäss Beispiel (2a).

**Beispiel 3**

Eine gemäss Beispiel 1 hergestellte Membran wird gemäss Beispiel 1(A) bei 55° C während 15 Minuten mit Hydroxylamin umgesetzt.

Die Membran wird dann für 2 Minuten in eine 1 %ige Lösung der Verbindung der Formel (3) bei 0° C und danach für 5 Minuten in eine 1%ige Lösung der Formel (8) bei Raumtemperatur eingetaucht.

Die Werte für Rückhalt und Durchfluss dieser Membran betragen 93,6 % und 220 $l/m^2.h$ bei 20 bar (0,15 %ige Lösung des Farbstoffs der Formel (1)).

Vor der Modifikation betrugen die Werte 61 % und 200 l/m.h.

## Patentansprüche

1. Semipermeable Membran aus chemisch modifizierten, vernetzten Polymeren auf Acrylnitrilbasis, dadurch gekennzeichnet, dass sie aus Polyacrylnitril oder Copolymeren aus Acrylnitril und anderen äthylenisch ungesättigten Monomeren besteht, die durch Umsetzung mit
(a) Hydroxylamin und
(b) einer mindestens zwei funktionelle Gruppen aufweisenden und mit Amidoximgruppen reaktionsfähigen, farblosen und ionische Gruppen aufweisenden Verbindung modifiziert sind.

2. Semipermeable Membran aus chemisch modifizierten, vernetzten Polymeren auf Acrylnitrilbasis, dadurch gekennzeichnet, dass sie aus Polyacrylnitril oder Copolymeren aus Acrylnitril und anderen äthylenisch ungesattigten Monomeren besteht, die durch Umsetzung mit
(a) Hydroxylamin und
(b) einer Kombination aus anionischen und kationischen, polyfunktionellen und mit Amidoximgruppen reaktionsfähigen Verbindungen modifiziert sind, wobei die anionischen Verbindungen den Formeln

(2) 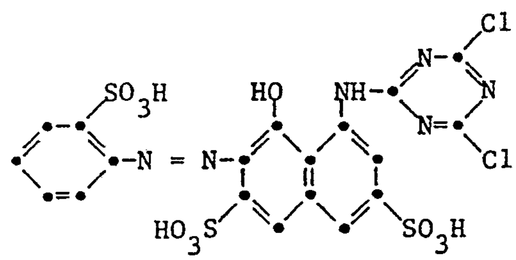

(3) 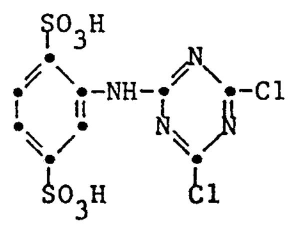

(5) 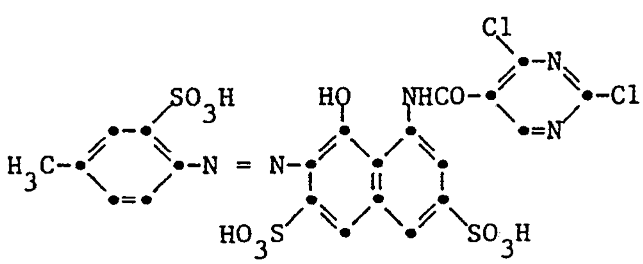

(6) 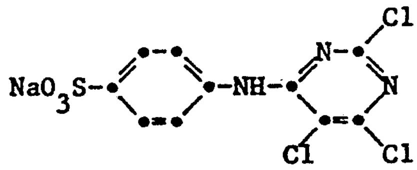

(7) 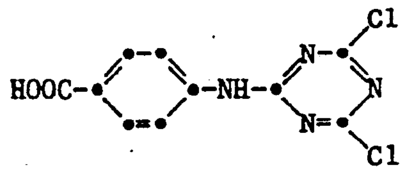

(9) 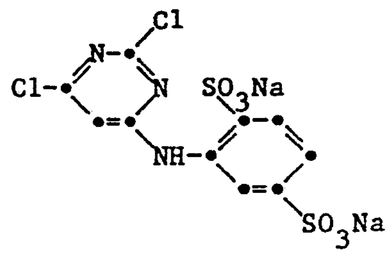

(10) 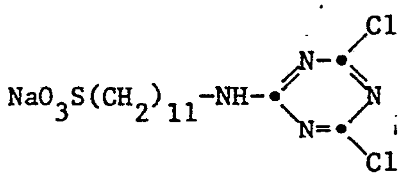

und die kationischen Verbindungen den Formeln

(4) 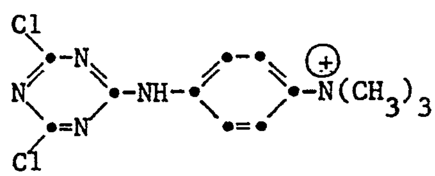 $Cl^{\ominus}$

(8) 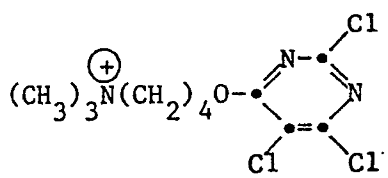 $Cl^{\ominus}$

entsprechen.

3. Membran nach den Ansprüchen 1 oder 2, dadurch gekennzeichnet, dass der Anteil der Acrylnitrileinheiten in der Membran mindestens 5 und vorzugsweise mindestens 30 Gewichtsprozent beträgt.

4. Membran nach einem der Ansprüche 1 bis 3, dadurch gekennzeichnet, dass die Membran Copolymere aus Acrylnitril und Vinylacetat, Vinyläthern, Vinylpyridin, Vinylchlorid, Styrol, Butadien, (Meth)acrylsäure oder (Meth)acrylaten, Maleinsäureanhydrid, 2-Aminoäthylmeth-acrylat oder Allylverbindungen, oder Ter- oder Tetrapolymere auf Acrylnitrilbasis oder deren Mischungen enthält.

5. Membran nach Anspruch 1, dadurch gekennzeichnet, dass die Komponente (b) als ionische Gruppen Sulfonsäure- oder Carboxylgruppen gegebenenfalls auch in Salzform, oder Ammoniumgruppen enthält.

6. Membran nach Anspruch 5, dadurch gekennzeichnet, dass die Komponente (b) ein farbloses Halogendiazin oder -triazin mit mindestens zwei reaktiven Gruppen ist.

7. Verfahren zur Herstellung einer semipermeablen Membran nach Anspruch 1, dadurch gekennzeichnet, dass man

(a) Nitrilgruppen in der Polyacrylnitril oder Copolymere aus Acrylnitril und anderen äthylenisch ungesättigten Monomeren enthaltenden Membran, durch Reaktion mit Hydroxylamin in Amidoximgruppen überführt und mit

(b) einer mindestens zwei funktionelle Gruppen aufweisenden, mit Amidoximgruppen reaktionsfähigen, farblosen und ionische Gruppen aufweisenden Verbindung

umsetzt.

8. Verfahren zur Herstellung einer semipermeablen Membran nach Anspruch 2, dadurch gekennzeichnet, dass man

(a) Nitrilgruppen in der Polyacrylnitril oder Copolymere aus Acrylnitril und anderen äthylenisch ungesättigten Monomeren enthaltenden Membran, durch Reaktion mit Hydroxylamin in Amidoximgruppen überführt und mit

(b) einer Kombination aus den anionischen und mit Amidoximgruppen reaktionsfähigen Verbindungen der Formeln (2), (3), (5), (6), (7), (9) und (10) und den kationischen und mit Amidoximgruppen reaktionsfähigen Verbindungen der Formeln (4) und (8) umsetzt.

9. Verfahren nach Anspruch 7, dadurch gekennzeichnet, dass man als Komponente (b) die Verbindung der Formel

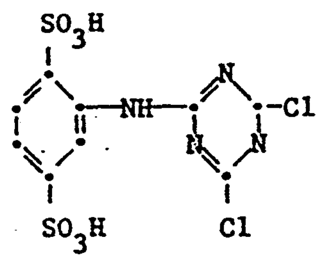

oder die Verbindung der Formel

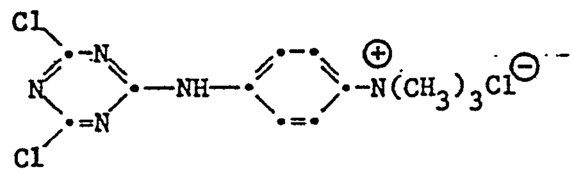

einsetzt.

10. Verfahren nach Anspruch 8, dadurch gekennzeichnet, dass man als Komponente (b) die Kombination der Verbindungen der Formeln

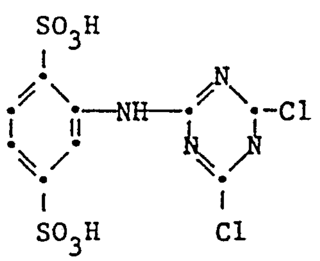

und

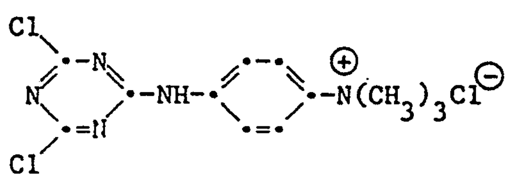

einsetzt.

11. Verfahren zur Herstellung einer semipermeablen Membran auf Acrylnitrilbasis nach den Ansprüchen 1 oder 2, dsdurch gekennzeichnet, dass man Polyacrylnitril oder Copolymere aus Acrylnitril und anderen äthylenisch ungesättigten Monomeren mit Hydroxylamin umsetzt, mit diesen Umsetzungsprodukten eine Membran giesst, die erhaltene Membran in wässriges Medium eintaucht und dann durch Reaktion mit der Komponente (b) modifiziert.

12. Ultrafiltrations (Umkehrosmose) verfahren zur Konzentrierung und/ oder Reinigung von Flüssigkeiten

(Lösungen) oder zur Trennung von gelösten Komponenten, dadurch gekennzeichnet, dass man die Flüssigkeiten (Lösungen) auf einer Seite einer Membran gemäss einem der Ansprüche 1 bis 6 vorlegt und unter Anwendung eines hydraulischen Drucks, der grösser als der osmotische Druck der Lösungen ist, die Lösungen filtriert.

13. Verwendung der Membranen nach einem der Ansprüche 1 bis 6 zur Trennung von gelösten Stoffen in wässrigen Medien nach dem Ultrafiltrations- und Umkehrosmoseverfahren.

## Claims

1. A semipermeable membrane of chemically modified and crosslinked polymers on the basis of acrylonitrile consisting of polyacrylonitrile or copolymers of acrylonitrile and other ethylenically unsaturated monomers, chemically modified through reaction with

(a) hydroxylamine and

(b) a colourless compound containing ionic groups and at least two functional groups capable of reacting with amidoxime groups.

2. A semipermeable membrane of chemically modified and crosslinked polymers on the basis of acrylonitrile consisting of polyacrylonitrile or copolymers of acrylonitrile and other ethylenically unsaturated monomers, chemicall modified through reaction with

(a) hydroxylamine and

(b) a combination of anionic and cationic polyfunctional compounds, capable of reacting with amidoxime groups,

wherein the anionic compounds are of the formulae

(2) 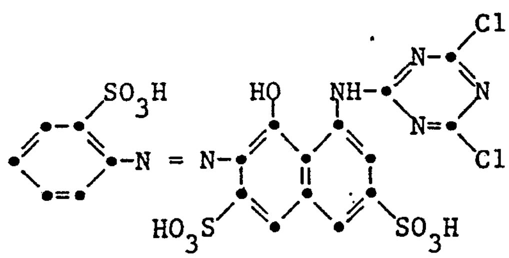

(3) 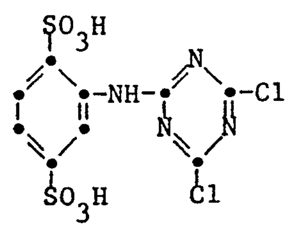

(5) 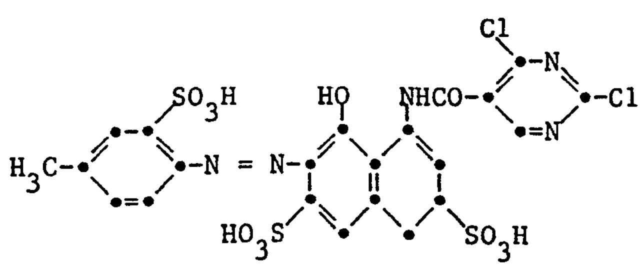

(6) 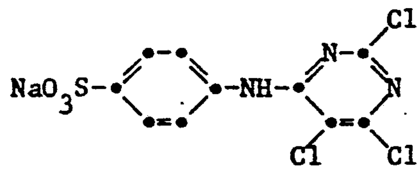

(7) 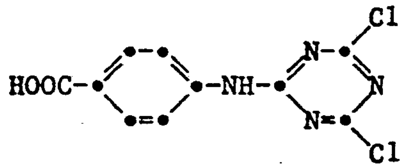

(9) 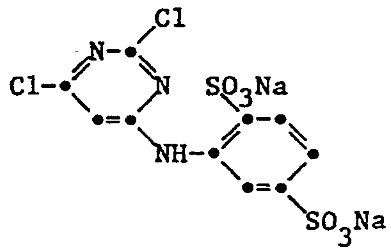 and

(10) 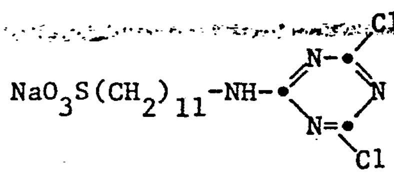 ,

and the cationic compounds are of the formulae

(4) 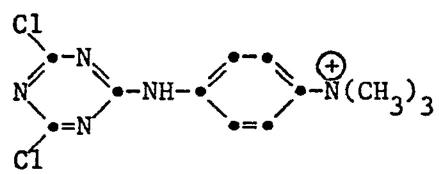 $Cl^{\ominus}$ and

(8) 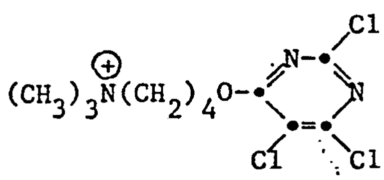 $Cl^{\ominus}$ .

3. A membrane according to claims 1 or 2, wherein the proportion of acrylonitrile units in the membrane is at least 5 and preferably at least 30% by weight.

4. A membrane according to anyone of claims 1 to 3, wherein the membrane contains copolymers of acrylonitrile and vinyl acetate, vinyl ethers, vinyl pyridine, vinyl chloride, styrene, butadiene, (meth)acrylic acid or (meth)acrylates, maleic anhydride, 2-amino-ethyl methacrylate or allyl compounds, or terpolymers or tetrapolymers based on acrylonitrile, or mixtures thereof.

5. A membrane according to claim 1, wherein component (b) contains carboxylic or sulfonic acid groups, optionally in the form of their salts, or ammonium groups, as ionic groups.

6. A membrane according to claim 5, wherein compound (b) is a colourless halogenodiazine or -triazine derivative containing at least 2 reactive groups.

7. A process for the manufacture of a semipermeable membrane according to claim 1, which comprises

(a) reacting nitrile groups of the membrane containing polyacrylonitrile or copolymers of acrylonitrile and other ethylenically unsaturated monomers with hydroxylamine, to get amidoxime groups, and

(b) reacting the amidoxime groups with a colourless compound containing ionic groups and at least two groups capable of reacting with amidoxime groups.

8. A process for the manufacture of a semipermeable membrane according to claim 2, which comprises

(a) reacting nitrile groups of the membrane containing polyacrylonitrile or copolymers of acrylonitrile and other ethylenically unsaturated monomers with hydroxylamine to get amidoxime groups, and

(b) reacting the amidoxime groups with a combination of the anionic compounds, capable of reacting with amidoxime groups, of the formulae (2), (3), (5), (6), (7), (9) and (10) and the cationic compounds, capable of

reacting with amidoxime groups, of the formulae (4) and (8).

9. A process according to claim 7, wherein component (b) is the compound of the formula

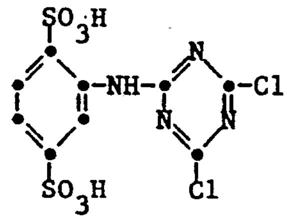

or of the formula

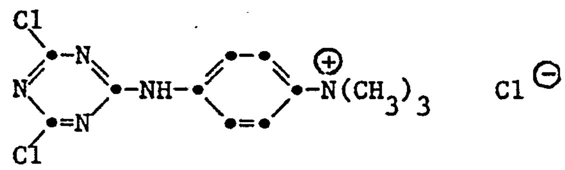

10. A process according to claim 8, wherein component (b) is the combination of the compounds of the formulae

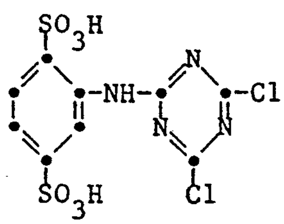

and

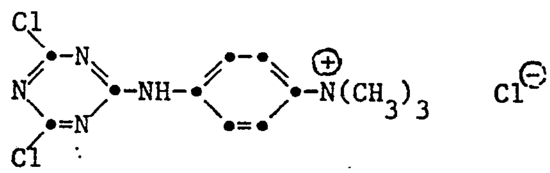

11. A process for the manufacture of a semipermeable membrane on the basis of acrylonitrile according to claims 1 or 2 which comprises reacting polyacrylonitrile or copolymers of acrylonitrile and other ethylenically unsaturated monomers with hydroxylamine, casting a membrane with these reaction products, immersing the obtained membrane in an aqueous medium and modifying the membrane by reacting it with component (b).

12. An ultrafiltration or reverse osmosis process for concentrating and/or purifying liquids (solutions) or separating components dissolved in these liquids from one another which comprises disposing these liquids (solutions) on one side of a semipermeable membrane according to anyone of claims 1 to 6 and filtering them by applying a hydraulic pressure greater than the osmotic pressure of said solutions.

13. Use of the membranes according to anyone of the claims 1 to 6 for separating compounds dissolved in aqueous media according to the ultrafiltration or reverse osmosis process.

**Revendications**

1. Membrane semiperméable en polymères réticulés, modifiés chimiquement, à base d'acrylonitrile, caractérisée en ce qu'elle consiste en polyacrylonitrile ou en copolymères d'acrylonitrile et d'autres monomères à insaturation éthylénique, qui sont modifiés par reaction avec

(a) l'hydroxylamine et

(b) un composé comportant au moins deux groupes fonctionnels et comportant des groupes ioniques et incolores, capables de réagir avec des groupes amidoximes.

2. Membrane semiperméable en polymères réticulés, modifiés chimiquement, à base d'acrylonitrile, caractérisée en ce qu'elle consiste en polyacrylonitrile ou en copolymères d'acrylonitrile et d'autres monomères à insaturation éthylénique, qui sont modifiés par reaction avec

(a) l'hydroxylamine et

(b) une combinaison de composés anioniques et cationiques, polyfonctionnels et capables de réagir avec des groupes amidoximes, dans laquelle les composés anioniques répondent aux formules

(2) 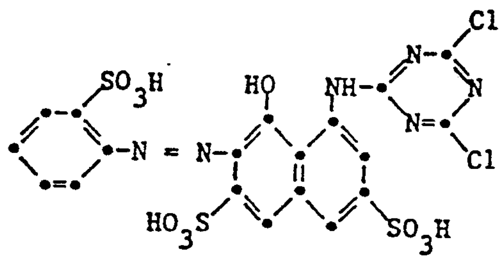

(3) 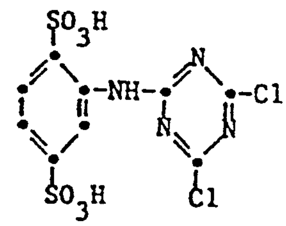

(5) 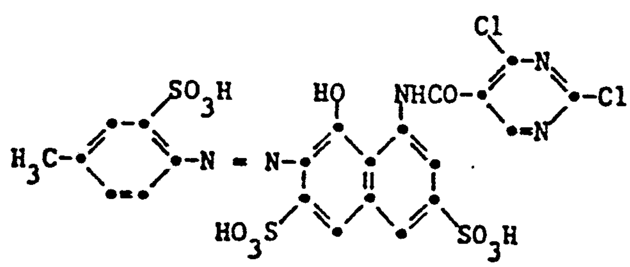

(6) 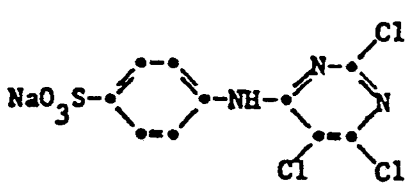

(7) 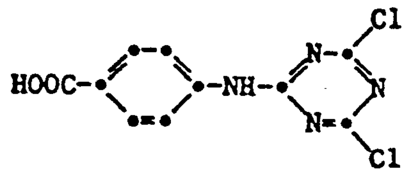

(9) 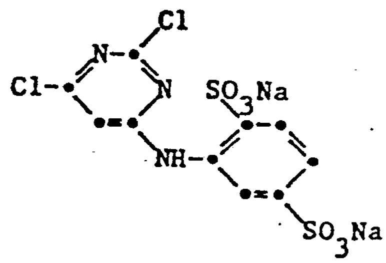

(10) 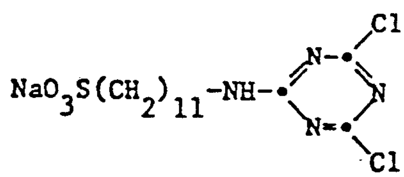

et les composés cationiques répondent aux formules

(4) 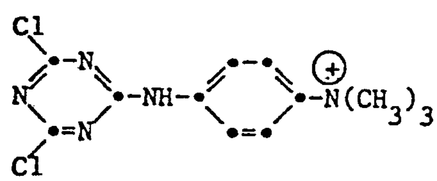 $Cl^{\ominus}$

(8) 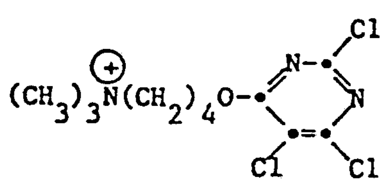 $Cl^{\ominus}$

3. Membrane selon la revendication 1 ou 2, caractérisée en ce que la proportion des unités acrylonitriles dans la membrane est d'au moins 5 et de préférence d'au moins 30 % en poids.

4. Membrane selon l'une des revendications 1 è 3, caractérisée en ce que la membrane contient des copolymères d'acrylonitrile et d'acétate de vinyle, d'éthers vinyliques, de vinylpyridine, de chlorure de vinyle, de styrène, de butadiène, d'acide (méth)acrylique ou de (méth)acrylates, d'anhydride maléique, de 2-aminoéthyl méthacrylate ou de composés allyliques, ou de ter- ou de tétrapolymères à base d'acrylonitrile ou de leurs mélanges.

5. Membrane selon la revendication 1, caractérisée en ce que le composant (b) contient comme groupes

ioniques des groupes d'acide sulfonique ou des groupes carboxyliques, cas échéant aussi sous forme de sels, ou des groupes ammonium.

6. Membrane selon la revendication 5, caractérisée en ce que le composant (b) est une halogénodiazine ou -triazine incolore comportant au moins deux groupes réactifs.

7. Procédé de préparation d'une membrane semiperméable selon la revendication 1, caractérisé en ce que

(a) dans la membrane contenant un polyacrylonitrile ou des copolymères d'acrylonitrile et d'autres monomères à insaturation éthylénique, on transforme les groupes nitriles par réaction avec l'hydroxylamine en groupes amidoximes et

(b) on fait réagir avec un composé comportant au moins deux groupes fonctionnels, comportant des groupes ioniques et incolores, capables de réagir avec des groupes amidoximes.

8. Procédé de préparation d'une membrane semiperméable selon la revendication 2, caractérisé en ce que

(a) dans la membrane contenant un polyacrylonitrile ou des copolymères d'acrylonitrile et d'autres monomères à insaturation éthylélique, on transforme les groupes nitriles par réaction avec l'hydroxylamine en groupes amidoximes et

(b) on fait réagir avec une combinaison de composés anioniques et capables de réagir avec des groupes amidoximes, des formules (2), (3), (5), (6), (7), (9) et (10) et de composés cationiques et capables de réagir avec des groupes amidoximes,des formules (4) et (8).

9. Procédé selon la revendication 7, caractérisé en ce que l'on met en jeu comme composant (b) le composé de formule

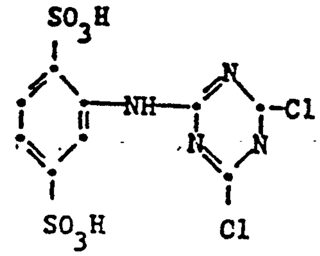

ou le composé de formule

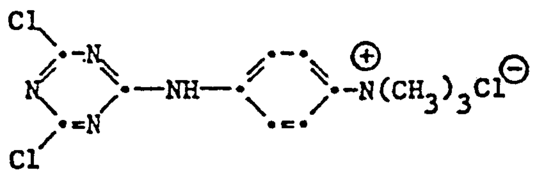

10. Procédé selon la revendication 8, caractérisé en ce que l'on met en jeu comme composant (b) la combinaison des composés des formules

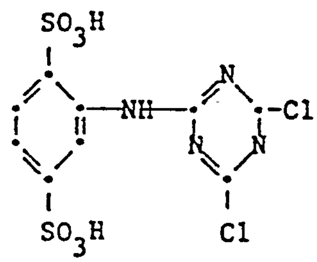

et

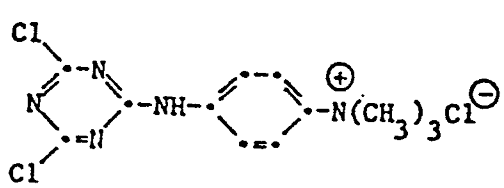

11. Procédé de préparation d'une membrane semiperméable à base d'acrylonitrile selon la revendication 1 ou 2, caractérisé en ce que l'on fait réagir avec l'hydroxylamine un polyacrylonitrile ou des copolymères d'acrylonitrile et d'autres monomères à insaturation éthylélique, on coule une membrane avec ces produits de réaction, on plonge la membrane obtenue dans un milieu aqueux et on la modifie ensuite par réaction avec le composant (b).

12. Procédé d'ultrafiltration (d'osmose inversée) pour concentrer et/ou purifier des liquides (des solutions) ou pour séparer des composés dissous, caractérisé en ce que l'on place les liquides (les solutions) d'un côté d'une membrane selon l'une des revendications 1 à 6 et l'on filtre les solutions en appliquant une pression hydraulique supérieure à la pression osmotique des solutions.

13. Utilisation des membranes selon l'une des revendications 1 à 6 pour la séparation de composés dissous dans des milieux aqueux, par le procédé d'ultrafiltration et d'osmose inversée.